# EUROPÄISCHE PATENTSCHRIFT

(11) **EP 3 181 850 B1**
(45) Veröffentlichungstag und Bekanntmachung des Hinweises auf die Patenterteilung: **09.10.2019**
(21) Anmeldenummer: 17155494.2
(22) Anmeldetag: 08.08.2012
(51) Int. Cl.: F01N 13/02, F01N 3/20, F01N 3/10, F01N 3/035, F01N 13/00, F02M 26/15, F02M 26/30

(54) **ABGASBEHANDLUNGSEINRICHTUNG, VERFAHREN ZUR AUFBEREITUNG VON ABGAS UND KRAFTFAHRZEUG**
EXHAUST GAS TREATMENT DEVICE, METHOD FOR PROCESSING EXHAUST GAS, AND MOTOR VEHICLE
DISPOSITIF DE TRAITEMENT DES GAZ D'ÉCHAPPEMENT, PROCÉDÉ DE TRAITEMENT DES GAZ D'ÉCHAPPEMENT ET VÉHICULE AUTOMOBILE

(30) Priorität: 25.08.2011 DE 102011111590
(43) Veröffentlichungstag der Anmeldung: 21.06.2017
(62) Teilanmeldung aus: 12748167.9
(73) Patentinhaber: VOLKSWAGEN AKTIENGESELLSCHAFT, 38440 Wolfsburg (DE)
(72) Erfinder: Sprute, Jörg, 29399 Wahrenholz (DE)

(56) Entgegenhaltungen:
- EP-A1- 2 500 538
- EP-A1- 2 551 482
- WO-A1-2012/110720
- WO-A1-2012/123660
- FR-A1- 2 955 612

## Beschreibung

Die vorliegende Erfindung betrifft eine Abgasbehandlungseinrichtung zur Aufbereitung von Abgas eines Verbrennungsaggregats, insbesondere eines Dieselmotors. Weiterhin betrifft die vorliegende Erfindung ein Verfahren zur Aufbereitung von Abgas eines Verbrennungsaggregats durch selektive katalytische Reaktion, sowie ein Kraftfahrzeug, in dem das erfindungsgemäße Verfahren realisiert wird beziehungsweise welches die erfindungsgemäße Abgasbehandlungseinrichtung aufweist.

Eine gründliche und effiziente Reinigung der Abgase einer Verbrennungskraftmaschine kann durch die Zugabe eines Reduktionsmittels zum Abgas in einer Abgasnachbehandlungseinrichtung erfolgen. Dabei werden insbesondere bei mager betriebenen Verbrennungskraftmaschinen, bei denen für die Verbrennung ein Luftüberschuss gegenüber einem stöchiometrischen Kraftstoff-Luft-Gemisch vorliegt, die Stickoxidverbindungen im Abgas reduziert. Als Reaktionsmittel wird üblicherweise Ammoniak verwendet. Bei ausreichenden Temperaturen des Abgases werden die Stickoxidverbindungen zusammen mit dem Ammoniak zu unschädlichen Bestandteilen wie Wasser und Stickstoff reduziert.

Üblicherweise erfolgt die Zugabe des Reduktionsmittels aufgrund von beengten Bauraumverhältnissen im Motorbereich an einem Kraftfahrzeug in dessen Unterbodenbereich und somit in dem dort verlaufenden Abgasstrang. Oftmals werden dabei zweiteilige Reduktionskatalysatoren oder auch zwei voneinander getrennte Reduktionskatalysatoren im Unterbodenbereich angeordnet. Dies bedingt einen gewissen Fertigungs- und Montageaufwand sowie einen erhöhten Energiebedarf, um die im Unterbodenbereich angeordneten Katalysatoren auf die erforderliche Betriebstemperatur zu bringen. Üblicherweise wird dies durch eine elektrische Heizung an oder in den Reduktionskatalysatoren realisiert, oder durch eine so genannte verschleppte Verbrennung von Treibstoff im Verbrennungsmotor. Das bedeutet, dass der Verbrennungsmotor die chemische Energie des Treibstoffes nicht optimal in Bewegungsenergie des Kraftfahrzeuges umsetzen kann. Zudem sind lediglich zirka 400 °C bis 450 °C durch die verschleppte Verbrennung von Treibstoff in den Reduktionskatalysatoren erreichbar.

Die Zuführung von Wärme zu den Reduktionskatalysatoren dient zum einen zur Erwärmung des Abgases zwecks Realisierung der erforderlichen Reduktion und zum anderen zur Erwärmung des Reduktionsmittels, um den dort enthaltenen Wasseranteil möglichst schnell in eine Gasphase zu versetzen.

Aus der DE 102 50 050 A1 ist bekannt, dass sich die Effizienz des Reduktionskatalysators erhöhen lässt, wenn Verbrennungswärme eines Verbrennungsmotors genutzt wird.

Auch aus der DE 10 2008 051 496 A1 ist der Hinweis entnehmbar, dass eine hohe Temperatur des Abgases günstig für den Betrieb des Reduktionskatalysators ist.

Die DE 103 23 607 A1 lehrt eine Vorrichtung zur Reinigung von Abgasen eines Verbrennungsmotors, die einen Oxidationskatalysator, einen Partikelfilter und einen Reduktionskatalysator aufweist. Der Reduktionskatalysator ist dabei mit dem Partikelfilter zu einer baulichen Einheit zusammengefasst.

Die WO 2012/110720 A1 ist Stand der Technik nach Art. 54 (3). In dem Dokument wird eine U-förmige Abgasanlage mit einem Oxidationskatalysator, einem Partikelfilter, einem Injektor für ein Reduktionsmittel beschrieben. Die Abgasanlage soll dabei in einem Kraftfahrzeug unter der Motorhaube montiert werden

Die EP 2 250 538 A1 ist ebenfalls Stand der Technik nach Art. 54 (3). Das Dokument beschreibt eine Abgasanlage in einer U-förmigen und L-förmigen Anordnung. Die Abgasanlage umfasst einen Oxidationskatalysator, einen Partikelfilter, einen SCR-Katalysator, ein Mittel zum Einbringen von Reduktionsmittel und einen Verdampfungskörper. In der Schrift wird die Konfiguration einer Abgasanlage beschrieben. Der Anbringungsort wird dabei nicht spezifiziert.

Die EP 2 551 482 A1 ist auch Stand der Technik nach Art. 54 (3). Aus dem Dokument ist eine U-förmige und L-förmige Abgasanlage bekannt. Die Abgasanlage umfasst einen Oxidationskatalysator, einen Partikelfilter, einen SCR-Katalysator, ein Mittel zum Einbringen von Reduktionsmittel und konvergierende Leitbleche, die den Abgasstrom vom Oxidationskatalysator zur Zone des Einbringens lenken. Neben der konkret beschriebenen Form der Abgasanlage wird die Positionierung dieser offengelassen.

Im Dokument FR 2 955 612 A1 wird eine unter der Motorhaube angeordnete Vorrichtung zur Reinigung von Abgas eines Verbrennungsaggregats offenbart. In einem einzigen Gehäuse sind ein Oxidationskatalysator, ein Dosiermodul zum Einbringen eines Reduktionsmittels und ein Reduktionskatalysator mit einem Partikelfilter angeordnet, welche der chemischen Umsetzung von Stickoxidverbindungen zur Stickstoff durch selektive katalytische Reduktion dienen.

Der vorliegenden Erfindung liegt die Aufgabe zugrunde, eine Einrichtung sowie ein Verfahren zur Verfügung zu stellen, mit denen in effizienter und kostengünstiger Weise die Stickoxidverbindungen im Abgas reduziert werden können.

Diese Aufgabe wird durch die erfindungsgemäße Abgasbehandlungseinrichtung nach Anspruch 1 sowie das erfindungsgemäße Verfahren zur Aufbereitung von Abgas eines Verbrennungsaggregats nach Anspruch 10 gelöst. Ergänzend wird gemäß Anspruch 13 ein Kraftfahrzeug vorgeschlagen, welches eine erfindungsgemäße Abgasbehandlungseinrichtung umfasst.

Es wird erfindungsgemäß Abgasbehandlungseinrichtung zur Aufbereitung von Abgas eines Verbrennungsaggregats, insbesondere eines Dieselmotors, zur Verfügung gestellt, wobei die Abgasbehandlungseinrichtung einen Abgasstrang mit einer Anschlusseinrichtung zum Anschließen des Abgasstranges am Verbrennungsaggregat umfasst und darin angeordnet einen Oxidationskatalysator, einen Reduktionskatalysator zur selektiven katalytischen Reduktion und einen Partikelfilter aufweist, wobei der Oxidationskatalysator stromaufwärts des Reduktionskatalysators und der Reduktionskatalysator stromaufwärts des Partikelfilters angeordnet ist. Ein Dosiermodul ist zwischen dem Oxidationskatalysator und dem Reduktionskatalysator angeordnet, wobei der Oxidationskatalysator, das Dosiermodul, der Reduktionskatalysator und der Partikelfilter an einer Seite des Verbrennungsaggregates angeordnet sind. Es ist erfindungsgemäß vorgesehen, dass der Reduktionskatalysator im Abgasstrang in Abgas-Strömungsrichtung derart weit stromaufwärts angeordnet ist, dass die Wärme des den Reduktionskatalysator passierenden Abgases ausreicht, um den Reduktionskatalysator auf Betriebstemperatur zu bringen. Der Partikelfilter ist dabei auf einer vertikalen Höhe tiefer als die Anschlussreinrichtung an der Seite des Verbrennungsaggregates angeordnet. Das Dosiermodul ist in einem verbindenden Modul angeordnet und der Oxidationskatalysator auf einer vertikalen Höhe auf der Höhe der Anschlusseinrichtung angeordnet ist Die Wärme des den Reduktionskatalysator passierenden Abgases ist dabei die Wärme des Abgases des Verbrennungsaggregats, gegebenenfalls abzüglich etwaiger Wärmeverluste durch den Transport des Abgases vom Verbrennungsaggregat zum Reduktionskatalysator. Die Abgaswärme ist somit die Wärme, die bei der exothermen Verbrennung des Kraftstoffes im Verbrennungsaggregat entsteht. Die Erfindung hat somit den Vorteil, dass die Temperatur des Abgases nach der exothermen Reaktion im Verbrennungsaggregat zur Zersetzung des Reduktionsmittels Ammoniak genutzt werden kann, sowie zur Reduktion von Stickstoffverbindungen zusammen mit Ammoniak zu unschädlichen Stoffen wie Wasser und Stickstoff. Der Reduktionskatalysator ist dabei bevorzugt ein so genannter SCR-Katalysator (selective catalytic reduction), der ein Reduktionsmittel, wie zum Beispiel Harnstoff, beziehungsweise einen Reduktionsmittel-Vorläufer, wie zum Beispiel eine Harnstoff-Wasser-Lösung, in Ammoniak umsetzt, welches dann katalytisch mit Stickoxiden selektiv zu Stickstoff und Wasser konvertiert wird. Dadurch lässt sich der Ausstoß von Stickoxiden um bis zu 90 % verringern.

Dabei kann es vorgesehen sein, dass die Abgasströmungsrichtung von einem Eintritt in den Oxidationskatalysator bis zu einem Austritt aus dem Partikelfilter im Wesentlichen eine Umlenkung von 180 ° erfährt.

Erfindungsgemäß kann der Abgaspfad in Abgasströmungsrichtung vom Eintritt in den Oxidationskatalysator bis zum Austritt aus dem Partikelfilter eine U-Form beschreiben.

Dabei kann bevorzugt der Abgaspfad auf den Schenkeln der U-Form parallel zur Längsausdehnung des Verbrennungsaggregats verlaufen.

In einer bevorzugten Ausführungsform können der Oxidationskatalysator und der Partikelfilter je in einem separaten Gehäuse untergebracht sein.

Das Dosiermodul kann in einer bevorzugten Ausführungsform auf der vertikalen Höhe des Oxidationskatalysators in dem verbindenden Modul angeordnet sein.

Ein solcher Reduktionskatalysator ist erfindungsgemäß im Abgasstrang in Abgas-Strömungsrichtung derart weit stromaufwärts angeordnet, dass die Wärme des den Reduktionskatalysator passierenden Abgases ausreicht, um eine Zersetzung des Reduktionsmittels zu realisieren und/oder eine Reduktion von Stickstoffverbindungen zusammen mit Ammoniak zu den genannten unschädlichen Stoffen wie Wasser und Stickstoff durchzuführen. Durch die erfindungsgemäße Anordnung des Reduktionskatalysators stromabwärts des Oxidationskatalysators ergibt sich der Vorteil der zusätzlichen Ausnutzung der Wärme des Abgases nach der exothermen Reaktion im Oxidationskatalysator. Das heißt, dass der Oxidationskatalysator im Betriebszustand die Temperatur des Abgases ebenfalls erhöht, so dass der nachgeschaltete Reduktionskatalysator noch effizienter betreibbar ist.

Durch die optimale Reduktion im Reduktionskatalysator gelangen aufbereitete Abgase in den nachgeschalteten Partikelfilter.

Des Weiteren kann zusätzlich ein Abgasturbolader im Abgasstrang angeordnet sein, wobei in diesem Falle der Reduktionskatalysator stromaufwärts des Abgasturboladers angeordnet ist, da dort die Temperatur des Abgases höher ist als an einer Position stromabwärts des Abgasturboladers.

Es lässt sich eine Wirkungsgradverbesserung bis auf zirka 90 % des Reduktionskatalysators erreichen, da nicht mehr eine herkömmliche elektrische Aufheizung des Reduktionsmittels oder eine verschleppte Verbrennung notwendig ist, so dass insgesamt der CO₂-Ausstoß verringert werden kann und/oder weniger Kraftstoff einzusetzen ist.

In bevorzugten Ausführungsformen ist vorgesehen, der der Reduktionskatalysator derart weit stromaufwärts angeordnet ist, dass das den Reduktionskatalysator passierende Abgas noch wenigstens 40 % und in besonders bevorzugter Ausführungsform wenigstens 80 % der Temperatur aufweist, die das Abgas direkt nach der Verbrennung im Verbrennungsaggregat hat. Die Erfindung betrifft somit eine Abgasbehandlungseinrichtung, die, wenn sie an ein Verbrennungsaggregat angeschlossen ist, von Abgas durchströmt ist, wobei das Abgas, welches am Reduktionskatalysator entlang strömt, noch wenigstens 40 % der Temperatur hat, die das Abgas direkt nach der Verbrennung im Verbrennungsaggregat aufweist. Vorzugsweise sollte die Position des Reduktionskatalysators so dicht am Verbrennungsaggregat sein, dass das den Reduktionskatalysator passierende Abgas eine Temperatur von mindestens 60 % und bevorzugt mindestens 80 % und in besonders günstiger Ausgestaltung mindestens 90 % der Temperatur des Abgases direkt nach der Verbrennung im Verbrennungsaggregat hat.

Der Abgasstrang, in dem der Reduktionskatalysator angeordnet ist, weist eine Anschlusseinrichtung zum Anschließen des Abgasstranges am Verbrennungsaggregat auf, so dass der Reduktionskatalysator so dicht wie möglich am Verbrennungsaggregat angeordnet werden kann. Dabei kann der Abgasstrang einfache Leitungsstücke oder auch weitere Aggregate, wie zum Beispiel weitere Katalysatoren, aufweisen. Durch die erfindungsgemäße Ausgestaltung des Abgasstranges ergibt sich der Vorteil des konstruktiv einfacheren Verlaufs der Abgasanlage am Unterboden eines Kraftfahrzeuges, da am Unterboden beziehungsweise unter dem Unterboden kein Reduktionskatalysator mehr angeordnet werden muss.

Durch die erfindungsgemäße frühzeitige Ausnutzung der hohen Temperatur des Abgases ist es möglich, schon wesentlich früher als bisher praktiziert Reduktionsmittel in das Abgas einzubringen und somit früher als bei herkömmlichen Reduktionsverfahren die Stickstoffverbindungen umzuwandeln. Durch die erfindungsgemäße frühe Einbringung des Reduktionsmittels in das Abgas lässt sich optimal eine frühe Homogenisierung des Abgases, das heißt eine gleichmäßige Verteilung des Reduktionsmittels im Abgas, erreichen, so dass die Reduktion effizient realisiert werden kann.

Außerdem kann thermische Energie des Verbrennungsaggregates genutzt werden, welche mittels Wärmestrahlung über die Umgebungsluft und/oder mittels Wärmeleitung im festen Material des an das Verbrennungsaggregat angeschlossenen Abgasstrangs zum Reduktionskatalysator gelangt, so dass die Temperatur des Abgases mindestens die bevorzugten 40 % und vorzugsweise über 80 % der Temperatur des Abgases unmittelbar nach dem Verbrennungsprozess beträgt. Durch die effiziente Betriebsweise des dicht am Verbrennungsaggregat angeordneten Reduktionskatalysators ist lediglich ein Reduktionskatalysator erforderlich, wodurch zusätzlich Volumen im Unterbodenbereich gewonnen beziehungsweise zur Verfügung gestellt wird und die Montage des Abgasstranges erleichtert wird.

In einer bevorzugten Ausgestaltung der Abgasbehandlungseinrichtung ist vorgesehen, dass der Reduktionskatalysator ein Dosiermodul zur dosierten Einbringung des Reduktionsmittels aufweist, wobei das Dosiermodul eine von einem Kühlmedium durchströmbare Kühlungseinheit aufweist und derart ausgestaltet und ausgelegt ist, dass die Kühlungseinheit strömungstechnisch mit einer Kühleinrichtung des Verbrennungsaggregats verbindbar ist, so dass Kühlmedium von der Kühlungseinrichtung zur Kühlung des Dosiermoduls nutzbar ist. Die Einbringung des Reduktionsmittels erfolgt bevorzugt durch Einspritzung. Das Dosiermodul wird durch die hohe Temperatur des Abgases erwärmt, wobei die bereits genannten Vorteile generiert werden. Das Dosiermodul kann zur Erleichterung und der Realisierung der Einspritzung des Reduktionsmittels gekühlt werden. Eine Kühlung ist insbesondere dann notwendig, wenn eine Erwärmung des Dosiermoduls über 80 °C zu erwarten ist, welche zu einer vorzeitigen Alterung des Harnstoffes führt. Aus fertigungstechnischen Gründen sowie hinsichtlich der Gewichtsoptimierung ist die Abgasbehandlungseinrichtung vorteilhaft ausgestaltet, wenn eine Kühleinrichtung des Verbrennungsaggregates das Dosiermodul ebenfalls mit Kühlmedium speisen kann. Bei Verwendung eines Dieselmotors als Verbrennungsaggregat kann die Kühlungseinheit des Dosiermoduls an die Kühlung des Motors angeschlossen sein, wodurch sich eine einfache und effiziente sowie gewichts- und volumensparende Kühlung des Dosiermoduls erreichen lässt.

Weiterhin kann insbesondere zum Zweck der Volumenverringerung vorgesehen sein, dass der Reduktionskatalysator an einem den Oxidationskatalysator mit dem Partikelfilter verbindenden Modul angeordnet ist. Dieses Modul kann ein so genannter Verbindungstrichter sein. Ein solches Modul ist kostengünstig herstellbar und erlaubt in einfacher Weise eine platzsparende Anordnung des Dosiermoduls des Reduktionskatalysators.

Diese Ausführungsform der Erfindung ist insbesondere dann vorteilhaft ausgestaltet, wenn das Modul ein vom Abgas durchströmbares Gehäuse aufweist, welches als Gehäuse des Reduktionskatalysators dient. In dieser Ausführungsform kann eine Einspritzung des Reduktionsmittels direkt in das Gehäuse beziehungsweise in das Modul erfolgen.

In alternativer Ausgestaltung kann vorgesehen sein, dass der Reduktionskatalysator direkt am Partikelfilter angeordnet ist. Das heißt, dass der Partikelfilter und der Reduktionskatalysator zusammen eine bauliche Einheit ausbilden, die insgesamt ein geringes Volumen aufweist, da das Gehäuse des Partikelfilters teilweise auch als Gehäuse des Reduktionskatalysators verwendet wird.

Weiterhin weist die erfindungsgemäße Abgasbehandlungseinrichtung eine Niederdruck-Abgasrückführungseinrichtung auf. Diese Kombination der erfindungsgemäßen Abgasbehandlungseinrichtung mit einer Niederdruck-Abgasrückführungseinrichtung hat den Vorteil der einfachen und kostengünstigen Abgasführung vom Reduktionskatalysator zur Niederdruck-Abgasrückführungseinrichtung, im Gegensatz zu herkömmlichen Ausführungsformen mit dem Reduktionskatalysator am Unterboden eines Kraftfahrzeuges, bei denen erhöhter baulicher Aufwand zur Abgasführung vom Reduktionskatalysator zur Niederdruck-Abgasrückführungseinrichtung anfällt. Eine Niederdruck-Abgasrückführungseinrichtung hat gegenüber einer Hochdruck-Abgasrückführungseinrichtung den Vorteil, dass der gesamte Abgasmassenstrom über eine Turbine für die Leistungsentwicklung zur Verfügung steht. Bei einer Hochdruck-Abgasrückführungseinrichtung wird ein Abgasmassenstrom vor der Turbine entnommen und dem Aggregat wieder zugeführt. Dieser Massenstrom kann nicht mehr zum Aufbau des Ladedrucks genutzt werden.

In vorteilhafter Ausführungsform weist die Niederdruck-Abgasrückführungseinrichtung eine Kühleinrichtung auf, die derart wärmetechnisch mit dem Dosiermodul des Reduktionskatalysators verbunden ist, dass mittels der Kühleinrichtung der Niederdruck-Abgasrückführungseinrichtung das Dosiermodul kühlbar ist. Dabei lässt sich eine direkte oder indirekte Kühlung realisieren. Bei einer direkten Kühlung ist eine unmittelbare thermische Kopplung zwischen der Kühleinrichtung und dem Dosiermodul vorgesehen. Bei einer indirekten Kühlung wird zumindest ein Teilstrom eines Kühlmediums der Kühleinrichtung dem Dosiermodul zugeleitet. Somit ist eine vollständige oder teilweise Kühlung des Dosiermoduls möglich.

Es wird außerdem erfindungsgemäß ein Verfahren zur Aufbereitung von Abgas eines Verbrennungsaggregats durch selektive katalytische Reduktion zur Verfügung gestellt, insbesondere zur Aufbereitung von Abgas eines Dieselmotors. Dabei strömt das Abgas durch einen mit dem Verbrennungsaggregat gekoppelten Abgasstrang, wobei in dem Abgasstrang ein Oxidationskatalysator stromaufwärts eines zur selektiven katalytischen Reduktion vorgesehenen Reduktionskatalysators und der Reduktionskatalysator stromaufwärts eines Partikelfilters angeordnet ist und die Wärme des den Reduktionskatalysator passierenden Abgases genutzt wird, um den Reduktionskatalysator auf Betriebstemperatur zu erwärmen. Dabei ist der Abgasstrang mit einer Anschlusseinrichtung an dem Verbrennungsaggregat angeschlossen. Außerdem ist ein Dosiermodul zwischen dem Oxidationskatalysator und dem Reduktionskatalysator angeordnet. Wobei der Oxidationskatalysator, das Dosiermodul, der Reduktionskatalysator und der Partikelfilter an einer Seite des Verbrennungsaggregates angeordnet sind. Der Partikelfilter ist auf einer vertikalen Höhe tiefer als die Anschlussreinrichtung an der Seite des Verbrennungsaggregates angeordnet und die Anschlusseinrichtung, der Oxidationskatalysator, das verbindende Modul, der Reduktionskatalysator und der Partikelfilter werden von dem durchströmenden Abgas auf dem Abgaspfad passiert. Das Abgas passiert auf dem Abgaspfad den Oxidationskatalysator auf einer vertikalen Höhe auf der Höhe der Anschlusseinrichtung. Das Dosiermodul führt dabei in einem verbindenden Modul eine Einspritzung in den Abgaspfad durch. Die Wärme des Abgases wird dabei zur Erwärmung des Reduktionskatalysators aus dem kalten Zustand sowie zur Aufrechterhaltung der Betriebstemperatur genutzt. Es kann dabei vorgesehen sein, dass ausschließlich Wärme des den Reduktionskatalysator passierenden Abgases genutzt wird, um den Reduktionskatalysator auf Betriebstemperatur zu bringen beziehungsweise zu halten. Als Reduktionsmittel kann dabei ein Reduktionsmittelvorläufer, wie zum Beispiel gasförmiges Ammoniak, oder auch eine Reduktionsmittelvorläuferlösung, wie zum Beispiel auch eine wässrige Lösung mit gelöstem Harnstoff, genutzt werden. Vorzugsweise sollte das den Reduktionskatalysator passierende Abgas eine Temperatur von mindestens 40 %, insbesondere 60 % und in besonderer Ausführungsform mindestens 80 % und bestmöglich mindestens 90 % der Temperatur des Abgases direkt nach der Verbrennung im Verbrennungsaggregat haben. Das heißt, dass das Abgas nach dem Austritt aus dem Verbrennungsaggregat nicht noch einmal elektrisch erwärmt wird, sondern die Temperatur des Abgases ausschließlich auf die exotherme Reaktion im Verbrennungsprozess im Verbrennungsaggregat und/oder im Oxidationskatalysator zurückzuführen ist. Eine geringere der Temperatur des Abgases im Reduktionskatalysator ist demzufolge lediglich auf eine Wärmeübertragung auf die Umgebung des Abgasstranges stromabwärts des Verbrennungsaggregates zurückzuführen.

Das Reduktionsmittel kann dabei direkt in den Partikelfilter oder in ein Modul eingebracht werden, welches den Oxidationskatalysator mit dem Partikelfilter strömungstechnisch verbindet. Das Reduktionsmittel kann an diesen Stellen durch Einspritzung in das Abgas eingebracht werden.

Erfindungsgemäß wird außerdem ein Kraftfahrzeug zur Verfügung gestellt, insbesondere ein dieselmotorisch betriebenes Kraftfahrzeug, welches eine erfindungsgemäße Abgasbehandlungseinrichtung aufweist. Dieses Kraftfahrzeug kann derart ausgestaltet sein, dass der Reduktionskatalysator ein Dosiermodul zur dosierten Einbringung des Reduktionsmittels aufweist, wobei das Dosiermodul eine von einem Kühlmodul durchströmbare Kühleinheit aufweist und strömungstechnisch mit einer Kühleinrichtung des Verbrennungsaggregats verbunden ist. Alternativ oder hinzukommend kann vorgesehen sein, dass die Kühlungseinheit des Dosiermoduls mit einem Kühler einer Abgasrückführungsanlage strömungstechnisch verbunden ist. In beiden Ausgestaltungsvarianten lässt sich eine bereits vorhandene Kühleinrichtung zur Kühlung des Dosiermoduls verwenden. In bevorzugter Ausführungsform des Kraftfahrzeuges ist dieses derart ausgestaltet, dass der Reduktionskatalysator oberhalb des Kraftfahrzeug-Unterbodens angeordnet ist. Bevorzugt weist das Kraftfahrzeug lediglich einen Reduktionskatalysator auf, nämlich den Reduktionskatalysator in der erfindungsgemäßen Abgasbehandlungseinrichtung, wobei der Reduktionskatalysator erfindungsgemäß sehr dicht am Motor und somit nicht mehr im Unterbodenbereich angeordnet ist.

Die Erfindung wird nachfolgend in Ausführungsbeispielen anhand der zugehörigen Zeichnungen erläutert. Es zeigen:
- Figur 1: ein Verbrennungsaggregat mit erfindungsgemäßer Abgasbehandlungseinrichtung in perspektivischer Ansicht;
- Figur 2: einen vergrößerten Ausschnitt aus der in Figur 1 dargestellten Abgasbehandlungseinrichtung;
- Figur 3: ein Dosiermodul eines Reduktionskatalysators;
- Figur 4: den Reduktionskatalysator in Ansicht von der Seite;
- Figur 5: den Oxidationskatalysator mit daran angeschlossenem Reduktionskatalysator in Ansicht von vorn;
- Figur 6: den Oxidationskatalysator mit angeschlossenem Reduktionskatalysator in Schnittansicht;
- Figur 7: eine erfindungsgemäße Abgasbehandlungseinrichtung mit integrierter Niederdruck-Abgasrückführungseinrichtung; und
- Figur 8: ein Kraftfahrzeug in Ansicht von der Seite.

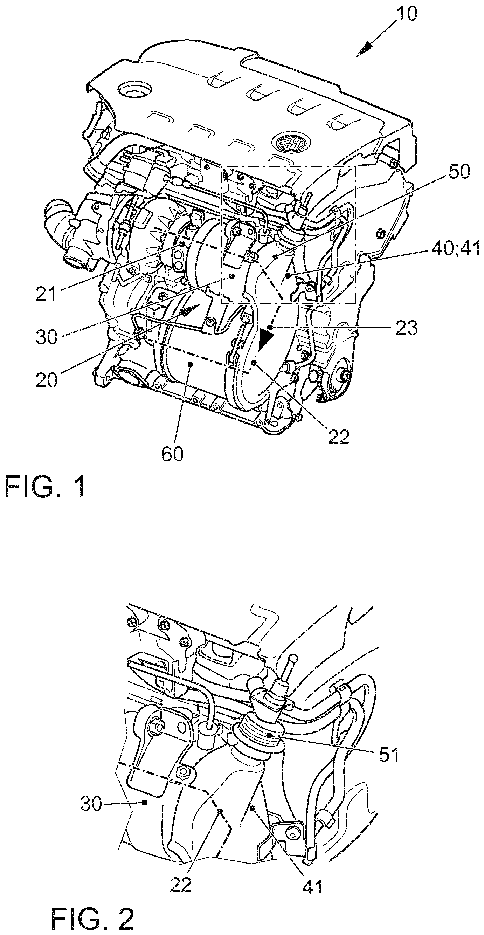

In Figur 1 ist deutlich ein Verbrennungsaggregat 10 ersichtlich, an dessen Abgasstrang 20 an einer Anschlusseinrichtung 21 ein Oxidationskatalysator 30 und an diesem stromabwärts in Abgas-Strömungsrichtung 23 im strich-punktierte angedeuteten Abgaspfad 22 ein Reduktionskatalysator 50 an einem verbindenden Modul 40 beziehungsweise an dessen Gehäuse 41 angeordnet ist. Das verbindende Modul 40 führt zu einem Partikelfilter 60, der ebenfalls im Abgaspfad 22 angeordnet ist.

Das heißt, dass der Reduktionskatalysator 50 am Gehäuse 41 des verbindenden Moduls 40 zwischen dem Oxidationskatalysator 30 und dem Partikelfilter 60 angeordnet ist.

Entgegen herkömmlichen Ausführungsformen ist somit der Reduktionskatalysator 50 sehr dicht am Verbrennungsaggregat 10 beziehungsweise an der Anschlusseinrichtung 21 angeordnet, so dass Wärme des Abgases, welches aus der exothermen Reaktion im Verbrennungsaggregat 10 entsteht, genutzt wird, um den Reduktionskatalysator 50 auf die erforderliche Betriebstemperatur zu bringen beziehungsweise ihn auf dieser Temperatur zu halten. Dabei kann zusätzlich auch die Wärme im Reduktionskatalysator 50 genutzt werden, die bei einer exothermen Reaktion im Oxidationskatalysator 30 freigesetzt wird, da der Reduktionskatalysator 50 unmittelbar an den Oxidationskatalysator 30 anschließt.

Wie Figur 2 entnehmbar ist, ist vorzugsweise das Dosiermodul 51 des Reduktionskatalysators 50 an dem verbindenden Modul 40 beziehungsweise an dessen Gehäuse angeschlossen.

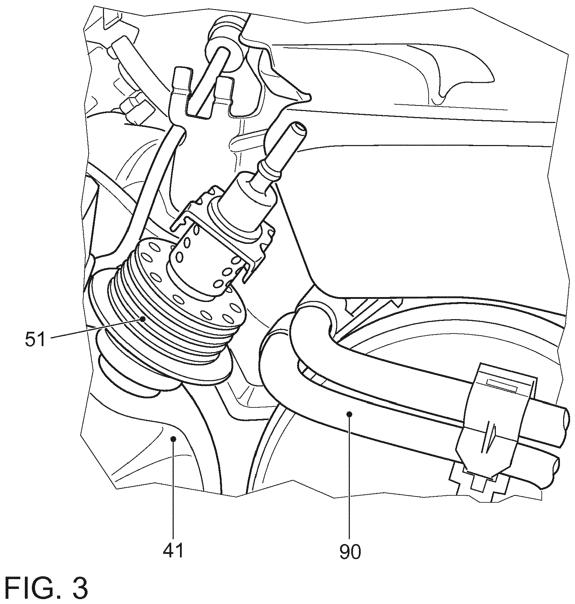

Wie in Figur 3 erkennbar ist, ergeben sich trotz üblicher beengter Bauraumverhältnisse im Motorbereich keine Kollisionen mit weiteren Bauteilen, wie zum Beispiel mit der Sammelleitung 90. Die Erfindung ist vorzugsweise an einem quer einzubauenden beziehungsweise eingebauten Dieselmotor anzuwenden.

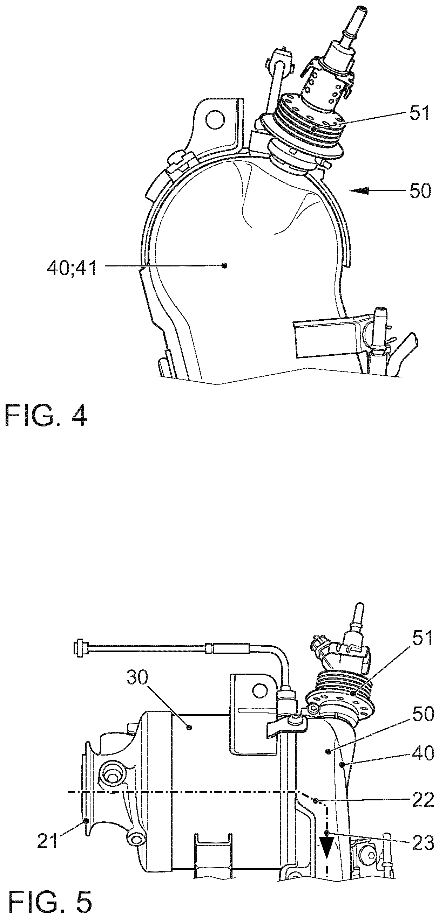

In den Figuren 4 und 5 ist die zweckmäßige Ausgestaltung des Gehäuses 41 des verbindenden Moduls 40 gezeigt, um die Reduktion in diesem Modul 40 durchführen zu können. Ersichtlich ist, dass zur Realisierung der Reduktion im Wesentlichen lediglich das Dosiermodul 51 am verbindenden Modul 40 anzuordnen ist.

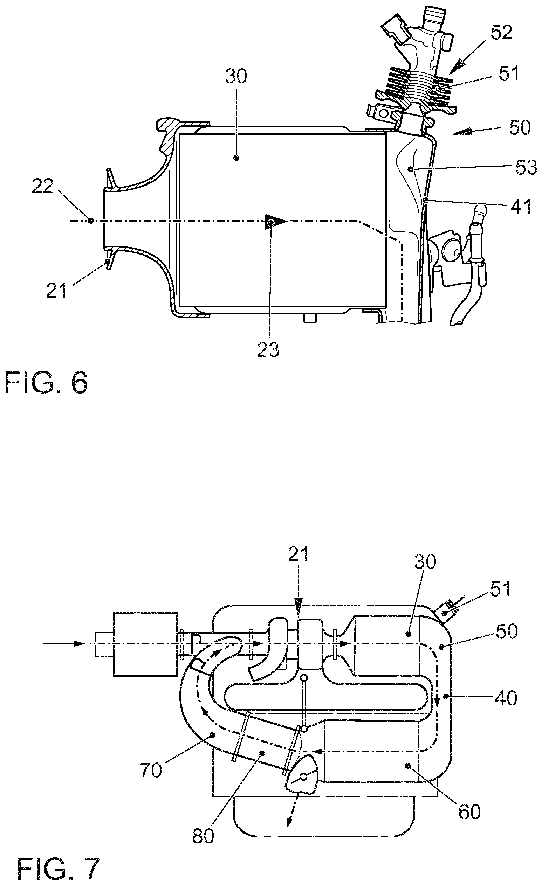

Aus Figur 6 ist ersichtlich, in welchem Bereich die eigentliche Reduktion realisiert wird. Das Abgas strömt im Abgaspfad 22 entlang der Abgas-Strömungsrichtung 23 durch den Oxidationskatalysator 30 und von diesem in das Gehäuse 41. Das an diesem Gehäuse 41 angesetzte Dosiermodul 51 des Reduktionskatalysators 50 ermöglicht die Einbringung des Reduktionsmittels in das heiße Abgas zur Realisierung der Reduktion. Dabei erfolgt die Einbringung des Reduktionsmittels durch das Dosiermodul 51 bevorzugt durch eine Einspritzung 53, wie sie im Hohlraum des Gehäuses 41 angedeutet ist. Eine Kühlungseinheit 52 am Dosiermodul 51 kann dabei mit einer Kühleinrichtung des Verbrennungsaggregates 10 strömungstechnisch verbunden sein und/oder mit einer Kühleinrichtung einer Niederdruck-Abgasrückführungseinrichtung 70 verbunden sein.

Die Anordnung einer solchen Niederdruck-Abgasrückführungseinrichtung 70 ist Figur 7 entnehmbar. Es ist ersichtlich, dass sich die Niederdruck-Abgasrückführungseinrichtung 70 im Abgaspfad 22 an den Partikelfilter 60 anschließt. Die Niederdruck-Abgasrückführungseinrichtung 70 weist dabei vorteilhafterweise eine Kühleinrichtung 80 auf, die, wie bereits beschrieben, mit der Kühlungseinheit 52 des Dosiermoduls 51 des Reduktionskatalysators 50 verbunden sein kann. Bei entsprechender Auslegung der Kühleinrichtung 80 des Verbrennungsaggregates 10 beziehungsweise der Niederdruck-Abgasrückführungseinrichtung 70 lässt sich das Dosiermodul 51 des Reduktionskatalysators 50 in einfacher und effizienter Weise kühlen, auch ohne Bauraum beanspruchende zusätzliche Kühlungsaggregate am Reduktionskatalysator 50 vorzusehen.

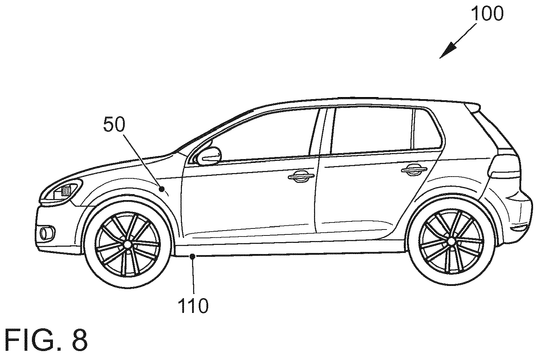

Aus Figur 8 ist ersichtlich, dass der Reduktionskatalysator 50 vorzugsweise im Motorraum des Kraftfahrzeuges 100 anzuordnen ist, und zwar so dicht wie möglich am Verbrennungsaggregat 10. Das heißt, dass der Reduktionskatalysator 50 über dem Kraftfahrzeug-Unterboden 110 angeordnet ist.

### Bezugszeichenliste

- 10: Verbrennungsaggregat
- 20: Abgasstrang
- 21: Anschlusseinrichtung
- 22: Abgaspfad
- 23: Abgas-Strömungsrichtung
- 30: Oxidationskatalysator
- 40: verbindendes Modul
- 41: Gehäuse
- 50: Reduktionskatalysator
- 51: Dosiermodul
- 52: Kühlungseinheit
- 53: Einspritzung
- 60: Partikelfilter
- 70: Niederdruck-Abgasrückführungseinrichtung
- 80: Kühleinrichtung
- 90: Sammelleitung
- 100: Kraftfahrzeug
- 110: Kraftfahrzeug-Unterboden

## Patentansprüche

1. Abgasbehandlungseinrichtung zur Aufbereitung von Abgas des Verbrennungsaggregats (10), umfassend einen Abgasstrang (20) mit einer Anschlusseinrichtung (21) zum Anschließen des Abgasstranges (20) am Verbrennungsaggregat (10) und im Abgasstrang (20) angeordnet einen Oxidationskatalysator (30), einen Reduktionskatalysator (50) zur selektiven katalytischen Reduktion und einen Partikelfilter (60), wobei der Oxidationskatalysator (30) stromaufwärts des Reduktionskatalysators (50) und der Reduktionskatalysator (50) stromaufwärts des Partikelfilters (60) angeordnet ist und ein Dosiermodul (51) zwischen dem Oxidationskatalysator (30) und dem Reduktionskatalysator (50) angeordnet ist, wobei der Reduktionskatalysator (50) im Abgasstrang (20) in Abgas-Strömungsrichtung (23) derart weit stromaufwärts angeordnet ist, dass die Wärme des den Reduktionskatalysator (50) passierenden Abgases ausreicht, um den Reduktionskatalysator (50) auf Betriebstemperatur zu bringen, wobei das Dosiermodul (51) in einem verbindenden Modul (40) angeordnet ist **dadurch gekennzeichnet,** wobei der Partikelfilter (60) auf einer vertikalen Höhe tiefer als die Anschlussreinrichtung (21) an der Seite des Verbrennungsaggregates (10) angeordnet ist, wobei der Oxidationskatalysator (30), das Dosiermodul (51), der Reduktionskatalysator (50) und der Partikelfilter (60) an einer Seite des Verbrennungsaggregates (10) angeordnet sind und der Oxidationskatalysator (30) auf einer vertikalen Höhe auf der Höhe der Anschlusseinrichtung (21) angeordnet ist, wobei die Abgasbehandlungseinrichtung weiterhin eine Niederdruck-Abgasrückführung (70) aufweist.

2. Abgasbehandlungseinrichtung zur Aufbereitung von Abgas nach Anspruch 1, **dadurch gekennzeichnet, dass** die Abgasströmungsrichtung (23) von einem Eintritt in den Oxidationskatalysator (30) bis zu einem Austritt aus dem Partikelfilter (60) im Wesentlichen eine Umlenkung von 180 ° erfährt.

3. Abgasbehandlungseinrichtung zur Aufbereitung von Abgas nach Anspruch 1, **dadurch gekennzeichnet, dass** der Abgaspfad (22) in Abgasströmungsrichtung (23) vom Eintritt in den Oxidationskatalysator (30) bis zum Austritt aus dem Partikelfilter (60) eine U-Form beschreibt.

4. Abgasbehandlungseinrichtung zur Aufbereitung von Abgas nach Anspruch 1, **dadurch gekennzeichnet, dass** der Abgaspfad (22) auf den Schenkeln der U-Form parallel zur Längsausdehnung des Verbrennungsaggregats verläuft.

5. Abgasbehandlungseinrichtung zur Aufbereitung von Abgas nach Anspruch 1, **dadurch gekennzeichnet, dass** der Oxidationskatalysator (30) und der Partikelfilter (60) je in einem separaten Gehäuse untergebracht sind.

6. Abgasbehandlungseinrichtung zur Aufbereitung von Abgas nach Anspruch 1, **dadurch gekennzeichnet, dass** das Dosiermodul (51) auf der vertikalen Höhe oberhalb des Oxidationskatalysators (30) in dem verbindenden Modul (40) angeordnet ist.

7. Abgasbehandlungseinrichtung zur Aufbereitung von Abgas nach Anspruch 1, **dadurch gekennzeichnet, dass** der Reduktionskatalysator (50) und der der Partikelfilter (60) zusammen eine bauliche Einheit bilden.

8. Abgasbehandlungseinrichtung zur Aufbereitung von Abgas nach Anspruch 7, **dadurch gekennzeichnet, dass** der Reduktionskatalysator (50) direkt am Partikelfilter (60) angeordnet ist.

9. Abgasbehandlungseinrichtung zur Aufbereitung von Abgas nach Anspruch 1, **dadurch gekennzeichnet, dass** eine Niederdruck-Abgasrückführungseinrichtung (70) eine Kühleinrichtung (80) umfasst, die derart wärmetechnisch mit dem Dosiermodul (51) des Reduktionskatalysators (50) verbunden ist, dass mittels der Kühleinrichtung (80) der Niederdruck-Abgasrückführungseinrichtung (70) das Dosiermodul (51) kühlbar ist.

10. Verfahren zur Aufbereitung von Abgas eines Verbrennungsaggregats (10) durch selektive katalytische Reduktion welches durch einen mit dem Verbrennungsaggregat (10) gekoppelten Abgasstrang strömt, wobei der Abgasstrang (20) mit einer Anschlusseinrichtung (21) an dem Verbrennungsaggregat (10) angeschlossen ist, wobei in dem Abgasstrang (20) ein Oxidationskatalysator (30) stromaufwärts eines zur selektiven katalytischen Reduktion vorgesehenen Reduktionskatalysators (50) in einem verbindenden Modul (40) angeordnet ist und der Reduktionskatalysator (50) stromaufwärts eines Partikelfilters (60) angeordnet ist und ein Dosiermodul (51) zwischen dem Oxidationskatalysator (30) und dem Reduktionskatalysator (50) angeordnet ist, wobei der Oxidationskatalysator (30), das Dosiermodul (51), der Reduktionskatalysator (50) und der Partikelfilter (60) an einer Seite des Verbrennungsaggregates (10) angeordnet sind, wobei der Reduktionskatalysator (50) im Abgasstrang (20) in Abgas-Strömungsrichtung (23) derart weit stromaufwärts angeordnet ist, dass die Wärme des den Reduktionskatalysator (50) passierenden Abgases genutzt wird, um den Reduktionskatalysator (50) auf Betriebstemperatur zu bringen, wobei der Partikelfilter (60) auf einer vertikalen Höhe tiefer als die Anschlussreinrichtung (21) an der Seite des Verbrennungsaggregates (10) angeordnet ist und die Anschlusseinrichtung, der Oxidationskatalysator (30), das verbindende Modul (40), der Reduktionskatalysator (50) und der Partikelfilter (60) von dem durchströmenden Abgas auf einem Abgaspfad (22) passiert werden, wobei das Abgas auf dem Abgaspfad (22) den Oxidationskatalysator (30) auf einer vertikalen Höhe auf der Höhe der Anschlusseinrichtung (21) passiert und das Dosiermodul (51) in dem verbindenden Modul (40) eine Einspritzung (53) in den Abgaspfad (22) durchführt und wobei die Abgasbehandlungseinrichtung weiterhin eine Niederdruck-Abgasrückführung (7) aufweist.

11. Kraftfahrzeug mit einem Verbrennungsaggregat (10) mit einer Abgasbehandlungseinrichtung nach einem der Ansprüche 1 bis 9.

12. Kraftfahrzeug nach Anspruch 11, **dadurch gekennzeichnet, dass** der Reduktionskatalysator (50) ein Dosiermodul (51) zur dosierten Einbringung des Reduktionsmittels aufweist, wobei das Dosiermodul (51) eine von einem Kühlmedium durchströmbare Kühlungseinheit (52) aufweist und strömungstechnisch mit einer Kühleinrichtung (80) des Verbrennungsaggregats (10) verbunden ist.

13. Kraftfahrzeug nach einem der Ansprüche 11 und 12, **dadurch gekennzeichnet, dass** der Reduktionskatalysator (50) oberhalb des Kraftfahrzeug-Unterbodens (110) angeordnet ist.

14. Kraftfahrzeug nach einem der Ansprüche 11 bis 13, **dadurch gekennzeichnet, dass** das Kraftfahrzeug dieselmotorisch betreibbar ist.

## Claims

1. An exhaust gas treatment device for treating exhaust gas of the combustion unit (10), comprising an exhaust gas system (20) with a connecting device (21) for connecting the exhaust gas system (20) to the combustion unit (10) and arranged in the exhaust gas system (20) an oxidation catalyst (30), a reduction catalyst (50) for the selective catalytic reduction and a particle filter (60), wherein the oxidation catalyst (30) is arranged upstream of the reduction catalyst (50) and the reduction catalyst (50) upstream of the particle filter (60) and a metering module (51) is arranged between the oxidation catalyst (30) and the reduction catalyst (50), wherein the reduction catalyst (50) is arranged far upstream in the exhaust gas system (20) in the direction of the exhaust gas flow (23) in such a manner that the heat of the exhaust gas passing through the reduction catalyst (50) suffices, in order to bring the reduction catalyst (50) to an operating temperature, wherein the metering module (51) is arranged in a connecting module (40) **characterized in that**, wherein the particle filter (60) is arranged at a vertical height lower than the connecting device (21) on the side of the combustion unit (10), wherein the oxidation catalyst (30), the metering module (51), the reduction catalyst (50) and the particle filter (60) are arranged on a side of the combustion unit (10) and the oxidation catalyst (30) is arranged at a vertical height at the height of the connecting device (21), wherein the exhaust gas treatment device furthermore has a low-pressure exhaust gas recirculation (70).

2. The exhaust gas treatment device for treating exhaust gas according to Claim 1, **characterized in that** the direction of the exhaust gas flow (23) essentially undergoes a deflection of 180° from an entry into the oxidation catalyst (30) to an exit from the particle filter (60).

3. The exhaust gas treatment device for treating exhaust gas according to Claim 1, **characterized in that** the exhaust gas path (22) in the direction of the exhaust gas flow (23) from the entry into the oxidation catalyst (30) to the exit from the particle filter (60) (60) describes a U-shape.

4. The exhaust gas treatment device for treating exhaust gas according to Claim 1, **characterized in that** the exhaust as path (22) runs on the limbs of the U-shape parallel to the longitudinal extension of the combustion unit.

5. The exhaust gas treatment device for treating exhaust gas according to Claim 1, **characterized in that** the oxidation catalyst (30) and the particle filter (60) are each accommodated in a separate housing.

6. The exhaust gas treatment device for treating exhaust gas according to Claim 1, **characterized in that** the metering module (51) is arranged at a vertical height above the oxidation catalyst (30) in a connecting module (40).

7. The exhaust gas treatment device for treating exhaust gas according to Claim 1, **characterized in that** the reduction catalyst (50) and the particle filter (60) together form a structural unit.

8. The exhaust gas treatment device for treating exhaust gas according to Claim 7, **characterized in that** the reduction catalyst (50) is arranged directly on the particle filter (60).

9. The exhaust gas treatment device for treating exhaust gas according to Claim 1, **characterized in that** a low-pressure exhaust gas recirculation device (70) comprises a cooling device (80), which is connected thermally with the metering module (51) of the reduction catalyst (50) in such a manner that by means of the cooling device (80) of the low-pressure exhaust gas recirculation device (70) the metering module (51) can be cooled.

10. A method for treating exhaust gas of a combustion unit (10) by the selective catalytic reduction which flows through an exhaust gas system coupled with the combustion unit (10), wherein the exhaust gas system (20) is connected with a connecting device (21) to the combustion unit (10), wherein in the exhaust gas system (20) an oxidation catalyst (30) is arranged upstream of a reduction catalyst (50) provided for the selective catalytic reduction in a connecting module (40) and the reduction catalyst (50) is arranged upstream of a particle filter (60) and a metering module (51) is arranged between the oxidation catalyst (30) and the reduction catalyst (50), wherein the oxidation catalyst (30), the metering module (51), the reduction catalyst (50) and the particle filter (60) are arranged on a side of the combustion unit (10), wherein the reduction catalyst (50) is arranged far upstream in the exhaust gas system (20) in the direction of the exhaust gas flow (23) in such a manner that the heat of the exhaust gas passing through the reduction catalyst (50) is used, in order to bring the reduction catalyst (50) to an operating temperature, wherein the particle filter (60) is arranged at a vertical height lower than the connecting device (21) on the side of the combustion unit (10) and the connecting device, the oxidation catalyst (30), the connecting module (40), the reduction catalyst (50) and the particle filter (60) are passed through by the exhaust gas flowing through on an exhaust gas path (22), wherein the exhaust gas passes on the exhaust gas path (22) through the oxidation catalyst (30) at a vertical height at the height of the connecting device (21) and the metering module (51) in the connecting module (40) performs an injection (53) into the exhaust as path (22) and wherein the exhaust gas treatment device furthermore has a low-pressure exhaust gas recirculation (70).

11. A motor vehicle with a combustion unit (10) with an exhaust gas treatment device according to any one of Claims 1 to 9.

12. The motor vehicle according to Claim 11, **characterized in that** the reduction catalyst (50) has a metering module (51) for the metered introduction of the reducing agent, wherein the metering module (51) has a cooling unit (52) through which a cooling medium can flow and is connected fluidically to a cooling device (80) of the combustion unit (10).

13. The motor vehicle according to any one of Claims 11 and 12, **characterized in that** the reduction catalyst (50) is arranged above the motor vehicle under body (110).

14. The motor vehicle according to any one of Claims 11 to 13, **characterized in that** the motor vehicle can be operated by means of a diesel engine.

## Revendications

1. Dispositif de traitement des gaz d'échappement destiné au traitement des gaz d'échappement d'un groupe de combustion interne (10), comprenant une ligne de gaz d'échappement (20) avec un dispositif de raccordement (21) destiné au raccordement de la ligne de gaz d'échappement (20) sur le groupe de combustion interne (10) et, disposés dans la ligne de gaz d'échappement (20), un catalyseur d'oxydation (30), un catalyseur de réduction (50) destiné à la réduction catalytique sélective et un filtre à particules (60), dans lequel le catalyseur d'oxydation (30) est disposé en amont du catalyseur de réduction (50), et le catalyseur de réduction (50) est disposé en amont du filtre à particules (60), et un module doseur (51) est disposé entre le catalyseur d'oxydation (30) et le catalyseur de réduction (50), dans lequel le catalyseur de réduction (50) dans la ligne de gaz d'échappement (20) est disposé suffisamment loin en amont dans le sens d'écoulement des gaz d'échappement (23) pour que la chaleur des gaz d'échappement franchissant le catalyseur de réduction (50) suffise pour amener le catalyseur de réduction (50) à la température de fonctionnement, dans lequel le module doseur (51) est disposé dans un module (40) de raccordement, **caractérisé en ce que** le filtre à particules (60) est disposé en hauteur verticale plus bas que le dispositif de raccordement (21) sur le côté du groupe de combustion interne (10), dans lequel le catalyseur d'oxydation (30), le module doseur (51), le catalyseur de réduction (50) et le filtre à particules (60) sont disposés sur un côté du groupe de combustion interne (10), et le catalyseur d'oxydation (30) est disposé en hauteur verticale à la hauteur du dispositif de raccordement (21), dans lequel le dispositif de traitement des gaz d'échappement comporte en outre un retour des gaz d'échappement basse pression (70).

2. Dispositif de traitement des gaz d'échappement destiné au traitement des gaz d'échappement selon la revendication 1, **caractérisé en ce que** le sens d'écoulement des gaz d'échappement (23) présente essentiellement une déviation de 180° à partir d'une entrée dans le catalyseur d'oxydation (30) jusqu'à une sortie hors du filtre à particules (60).

3. Dispositif de traitement des gaz d'échappement destiné au traitement des gaz d'échappement selon la revendication 1, **caractérisé en ce que** le chemin des gaz d'échappement (22) dans le sens d'écoulement des gaz d'échappement (23) décrit une forme en U à partir de l'entrée dans le catalyseur d'oxydation (30) jusqu'à la sortie hors du filtre à particules (60) .

4. Dispositif de traitement des gaz d'échappement destiné au traitement des gaz d'échappement selon la revendication 1, **caractérisé en ce que,** sur les branches de la forme en U, le chemin des gaz d'échappement (22) est parallèle à l'étendue longitudinale du groupe de combustion interne.

5. Dispositif de traitement des gaz d'échappement destiné au traitement des gaz d'échappement selon la revendication 1, **caractérisé en ce que** le catalyseur d'oxydation (30) et le filtre à particules (60) sont logés respectivement dans un boîtier séparé.

6. Dispositif de traitement des gaz d'échappement destiné au traitement des gaz d'échappement selon la revendication 1, **caractérisé en ce que** le module doseur (51) est disposé en hauteur verticale au-dessus du catalyseur d'oxydation (30) dans le module (40) de raccordement.

7. Dispositif de traitement des gaz d'échappement destiné au traitement des gaz d'échappement selon la revendication 1, **caractérisé en ce que** le catalyseur de réduction (50) et le filtre à particules (60) forment conjointement une unité constructive.

8. Dispositif de traitement des gaz d'échappement destiné au traitement des gaz d'échappement selon la revendication 7, **caractérisé en ce que** le catalyseur de réduction (50) est disposé directement sur le filtre à particules (60).

9. Dispositif de traitement des gaz d'échappement destiné au traitement des gaz d'échappement selon la revendication 1, **caractérisé en ce qu'**un dispositif de retour des gaz d'échappement basse pression (70) comprend un dispositif de refroidissement (80) qui est raccordé thermiquement au module doseur (51) du catalyseur de réduction (50) de telle sorte que le module doseur (51) peut être refroidi au moyen du dispositif de refroidissement (80) du dispositif de retour des gaz d'échappement basse pression (70).

10. Procédé destiné au traitement des gaz d'échappement d'un groupe de combustion interne (10) par réduction catalytique sélective qui s'écoulent à travers une ligne de gaz d'échappement couplée au groupe de combustion interne (10), dans lequel la ligne de gaz d'échappement (20) est raccordée à un dispositif de raccordement (21) sur le groupe de combustion interne (10), dans lequel, dans la ligne de gaz d'échappement (20), un catalyseur d'oxydation (30) est disposé dans un module (40) de raccordement en amont d'un catalyseur de réduction (50) prévu pour la réduction catalytique sélective, et le catalyseur de réduction (50) est disposé en amont d'un filtre à particules (60), et un module doseur (51) est disposé entre le catalyseur d'oxydation (30) et le catalyseur de réduction (50), dans lequel le catalyseur d'oxydation (30), le module doseur (51), le catalyseur de réduction (50) et le filtre à particules (60) sont disposés sur un côté du groupe de combustion interne (10), dans lequel le catalyseur de réduction (50) dans la ligne de gaz d'échappement (20) est disposé suffisamment loin en amont dans le sens d'écoulement des gaz d'échappement (23) pour que la chaleur des gaz d'échappement franchissant le catalyseur de réduction (50) suffise pour amener le catalyseur de réduction (50) à la température de fonctionnement, dans lequel le filtre à particules (60) est disposé en hauteur verticale plus bas que le dispositif de raccordement (21) sur le côté du groupe de combustion interne (10), et le dispositif de raccordement, le catalyseur d'oxydation (30), le module (40) de raccordement, le catalyseur de réduction (50) et le filtre à particules (60) sont franchis par le gaz d'échappement en écoulement sur le chemin des gaz d'échappement (22), dans lequel les gaz d'échappement franchissent sur le chemin des gaz d'échappement (22) le catalyseur d'oxydation (30) en hauteur verticale à la hauteur du dispositif de raccordement (21), et le module doseur (51) effectue dans le module (40) de raccordement une injection (53) dans le chemin des gaz d'échappement (22), et dans lequel le dispositif de traitement des gaz d'échappement comporte en outre un dispositif de retour des gaz d'échappement basse pression (7).

11. Véhicule automobile avec un groupe de combustion interne (10) avec un dispositif de traitement des gaz d'échappement selon l'une des revendications 1 à 9.

12. Véhicule automobile selon la revendication 11, **caractérisé en ce que** le catalyseur de réduction (50) comporte un module doseur (51) destiné à l'introduction dosée du moyen de réduction, dans lequel le module doseur (51) comporte une unité de refroidissement (52) pouvant être balayée par un fluide de refroidissement et est raccordé fluidiquement à un dispositif de refroidissement (80) du groupe de combustion interne (10).

13. Véhicule automobile selon l'une des revendications 11 et 12, **caractérisé en ce que** le catalyseur de réduction (50) est disposé au-dessus du plancher (110) de véhicule automobile.

14. Véhicule automobile selon l'une des revendications 11 à 13, **caractérisé en ce que** le véhicule automobile peut fonctionner avec un moteur diesel.
